# EUROPEAN PATENT APPLICATION

(11) **EP 4 679 890 A1**
(43) Date of publication of application: **14.01.2026**
(21) Application number: 23933002.0
(22) Date of filing: 12.04.2023
(51) Int. Cl.: H04W 36/18, H04W 36/28, H04W 36/36, H04W 92/20, H04W 84/12

(54) **TERMINAL DEVICE, SHARING ACCESS POINT, SHARED ACCESS POINT, AND WIRELESS COMMUNICATION METHOD**

(71) Applicant: NTT, Inc., Tokyo 100-8116 (JP)
(72) Inventor: KISHIDA, Akira, Musashino-shi, Tokyo 180-8585 (JP); NAGATA, Kengo, Musashino-shi, Tokyo 180-8585 (JP); ASAI, Yusuke, Musashino-shi, Tokyo 180-8585 (JP); TAKATORI, Yasushi, Musashino-shi, Tokyo 180-8585 (JP)
(74) Representative: Nederlandsch Octrooibureau
(86) International application number: PCT/JP2023/014919
(87) International publication number: WO 2024/214226

(57) **Abstract**

In one aspect of the present invention, a terminal apparatus wirelessly communicates with an access point system including a sharing access point and shared access points located at different physical positions. The terminal apparatus includes a communication unit including terminal wireless stations and configured to wirelessly communicate with the shared access points using the terminal wireless stations, and a management unit configured to establish a multi-AP connection that is a comprehensive wireless connection between the sharing access point and the terminal apparatus, and manage which of wireless links included in the established multi-AP connection is used for communication with the access point system.

## Description

### Technical Field

The present invention relates to wireless communication.

### Background Art

A wireless local area network (LAN) is known as a system that wirelessly connects an access point (AP) and a terminal. In the wireless LAN, the terminal performs an association procedure with the AP to establish wireless connection with the AP.

In a case where the connection is switched from the AP to which the terminal is currently connected to another AP due to the movement of the terminal, a disassociation procedure of disconnecting the connection to the currently connected AP is performed, and the association procedure with a new AP is performed. Therefore, when a connection destination is switched, instantaneous interruption of the wireless connection occurs. The instantaneous interruption of the wireless connection causes a data communication delay.

In a case where a wide area is covered by a plurality of APs and a device such as a robot is remotely controlled as in a use case where a wireless LAN is applied to industrial Internet of things (IoT), if a delay occurs due to the instantaneous interruption as described above, the control of the device may become unstable.

In wireless communication, improvement of reliability such as suppression of delay due to instantaneous interruption is required.

### Citation List

### Non-Patent Literature

Non-Patent Literature 1: IEEE Std 802.11-2020, "4.5.3.3 Association" and "4.5.3.4 Reassociation" in Part 11: Wireless LAN Medium Access Control (MAC) and Physical Layer (PHY) Specifications, February 26, 2021, p.264-265.

### Summary of Invention

### Technical Problem

An object of the present invention is to provide a wireless communication technology capable of improving reliability of wireless communication.

### Solution to Problem

In one aspect of the present invention, a terminal apparatus wirelessly communicates with an access point system including a sharing access point and a plurality of shared access points that are located at different physical positions and wirelessly communicates with the sharing access point. The terminal apparatus includes a communication unit including a plurality of terminal wireless stations and configured to wirelessly communicate with the plurality of shared access points using the plurality of terminal wireless stations, and a management unit configured to establish a multi-AP connection that is a comprehensive wireless connection between the sharing access point and the terminal apparatus, and manage which of a plurality of wireless links included in the established multi-AP connection is used for communication with the access point system. The management unit transmits, by using the communication unit, a handover request to the sharing access point via any of the plurality of shared access points, the handover request requesting switching of a connection destination of a first terminal wireless station of the plurality of terminal wireless stations from a first shared access point of the plurality of shared access points to a second shared access point of the plurality of shared access points, receives, by using the communication unit, a handover response that is a response to the handover request from the sharing access point via any of the plurality of shared access points, and switches the connection destination of the first terminal wireless station from the first shared access point to the second shared access point in response to the received handover response.

### Advantageous Effects of Invention

According to the present invention, there is provided a wireless communication technology capable of improving reliability of wireless communication.

### Brief Description of Drawings

Fig. 1 is a block diagram illustrating a communication system including a wireless network according to an embodiment.
Fig. 2 is a block diagram illustrating a hardware configuration of a sharing AP according to the embodiment.
Fig. 3 is a block diagram illustrating a hardware configuration of a shared AP according to the embodiment.
Fig. 4 is a block diagram illustrating a hardware configuration of a terminal according to the embodiment.
Fig. 5 is a block diagram illustrating a functional configuration of the sharing AP according to the embodiment.
Fig. 6 is a diagram illustrating a format of an association notification transmitted by the sharing AP according to the embodiment.
Fig. 7 is a table illustrating terminal management information stored in the sharing AP according to the embodiment.
Fig. 8 is a block diagram illustrating a functional configuration of the shared AP according to the embodiment.
Fig. 9 is a diagram illustrating a format of a beacon frame transmitted by the shared AP according to the embodiment.
Fig. 10 is a table illustrating link management information stored in the shared AP according to the embodiment.
Fig. 11 is a block diagram illustrating a functional configuration of the terminal according to the embodiment.
Fig. 12 is a table illustrating AP management information and link management information stored in the terminal according to the embodiment.
Fig. 13 is a sequence diagram illustrating a procedure of wireless communication processing according to the embodiment.
Fig. 14 is a flowchart illustrating a procedure of determination processing executed by the sharing AP according to the embodiment.
Fig. 15 is a diagram for describing the wireless communication processing illustrated in Fig. 13.

### Description of Embodiments

Hereinafter, embodiments of the present invention will be described with reference to the drawings. To avoid duplicate descriptions, the same components are denoted by the same reference numerals throughout the drawings.

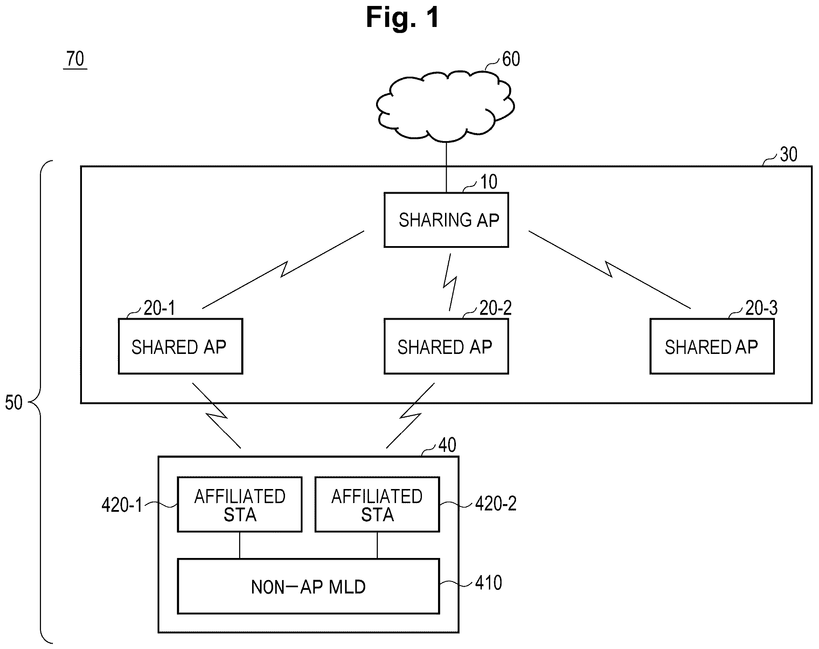

Fig. 1 schematically illustrates a communication system 70 including a wireless network 50 according to an embodiment. As illustrated in Fig. 1, the communication system 70 includes an access point (AP) system 30, a terminal 40, and a communication network 60. The AP system 30 and the terminal 40 are included in a wireless network 50. The wireless network is also referred to as a wireless communication system.

The AP system 30 operates as an access point of a wireless LAN. The access point is also referred to as a base station. The AP system 30 may be wirelessly connected to one or a plurality of terminals 40. The number of terminals 40 wirelessly connected to the AP system 30 dynamically changes. In the example illustrated in Fig. 1, the AP system 30 is wirelessly connected to one terminal 40. The AP system 30 establishes one or more wireless links with the terminal 40, and communicates with the terminal 40 by using the established one or more wireless links. The AP system 30 is connected in a wired manner to the communication network 60, which may include the Internet.

The terminal 40 is a terminal apparatus having a wireless communication function, and includes a wireless communication circuit that operates as a client of a wireless LAN. Examples of the wireless terminal include smart phones, mobile phones, tablet personal computers (PCs), desktop PCs, laptop PCs, Internet of things (IoT) sensors/devices. The terminal 40 accesses the communication network 60 via the AP system 30. For example, the terminal 40 exchanges data with a server (not illustrated) on the communication network 60 via the AP system 30. For example, the server may be a service provider that provides a service such as an online gaming, and exchanges data related to the service with the terminal 40 via the communication network 60.

The wireless communication between the AP system 30 and the terminal 40 is based on the IEEE 802.11 standard. Note that although the wireless communication based on the IEEE 802.11 standard is described as an example in the present specification, a wireless communication standard different from the IEEE 802.11 standard may be used.

The IEEE 802.11 standard defines a first layer of an open systems interconnection (OSI) model and a media access control (MAC) sublayer in a second layer of the OSI model. In the OSI model, the communication function is divided into seven layers (a first layer: a physical layer, a second layer: a data link layer, a third layer: a network layer, a fourth layer: a transport layer, a fifth layer: a session layer, a sixth layer: a presentation layer, and a seventh layer: an application layer). The data link layer includes, for example, a logical link control (LLC) layer and a MAC layer. The LLC layer attaches a destination service access point (DSAP) header, a source service access point (SSAP) header, and the like to data input from a higher-level layer to generate an LLC packet, for example. The MAC layer attaches a MAC header to the LLC packet to generate a MAC frame, for example. The physical layer adds a preamble, a physical layer (PHY) header, and the like to the MAC frame to generate a wireless frame, for example. Here, processing for the first layer and the MAC sublayer in the second layer defined by the IEEE 802.11 standard will be mainly described, and description of processing for other layers is omitted.

The AP system 30 includes a sharing AP 10 and a plurality of shared APs 20 located at different physical positions (locations). In the example illustrated in Fig. 1, three shared APs 20-1, 20-2, and 20-3 are provided as shared APs 20. The sharing AP 10 controls or manages the shared APs 20. The shared APs 20 belong to the sharing AP 10. The sharing AP 10 includes a communication path with each of the shared APs 20. Specifically, the sharing AP 10 is wirelessly connected to each of the shared APs 20. The wireless communication between the sharing AP 10 and the shared AP 20 is based on the IEEE 802.11 standard. Note that a wireless communication standard different from the IEEE 802.11 standard may be used.

The sharing AP 10 corresponds to a root of the AP system 30, and the shared AP 20 corresponds to an interface of the AP system 30 with respect to the terminal 40, and relays communication between the sharing AP 10 and the terminal 40. The sharing AP is also referred to as an AP multi-link device (AP MLD) or an AP master device, and the shared AP is also referred to as an AP station (AP STA), a relay station, a relay device, an affiliated AP, or an AP slave device. Placing the shared APs 20 at different locations achieves a wide coverage area of the AP.

The terminal 40 includes a non-AP multi-link device (non-AP MLD) 410 and one or more affiliated stations (STAs) 420. In the example illustrated in Fig. 1, two affiliated STAs 420-1 and 420-2 are provided as the affiliated STAs 420. The affiliated STA is also referred to as a terminal wireless station. The non-AP MLD 410 controls or manages the affiliated STAs 420. The affiliated STAs 420 belong to the non-AP MLD 410. The non-AP MLD 410 is connected to each of the affiliated STAs 420 in a wired manner.

In the wireless network 50, the sharing AP 10 and the non-AP MLD 410 establish a multi-AP connection therebetween for data exchange. The multi-AP connection indicates a comprehensive connection between a plurality of the shared APs 20 included in the AP system 30 and a plurality of the affiliated STAs 420 included in the terminal 40. In the example illustrated in Fig. 1, the multi-AP connection indicates a wireless link between the shared AP 20-1 and the affiliated STA 420-1, a wireless link between the shared AP 20-1 and the affiliated STA 420-2, a wireless link between the shared AP 20-1 and an affiliated STA 420-3, a wireless link between the shared AP 20-2 and the affiliated STA 420-1, a wireless link between the shared AP 20-2 and the affiliated STA 420-2, and a wireless link between the shared AP 20-2 and the affiliated STA 420-3. The sharing AP 10 and the non-AP MLD 410 mutually exchange information regarding the plurality of shared APs 20 belonging to the sharing AP 10 and information regarding the affiliated STAs 420 belonging to the non-AP MLD 410, and collectively establish all the wireless links between the shared APs 20 and the affiliated STAs 420 in advance.

One or more of the wireless links included in the established multi-AP connection is used for communication. When the terminal 40 is at the position illustrated in Fig. 1, the wireless link between the shared AP 20-1 and the affiliated STA 420-1 and the wireless link between the shared AP 20-2 and the affiliated STA 420-2 are used for data exchange. In other words, the affiliated STA 420-1 is wirelessly connected to the shared AP 20-1, and the affiliated STA 420-2 is wirelessly connected to the shared AP 20-2. The affiliated STA 420 being wirelessly connected to the shared AP 20 or the shared AP 20 being wirelessly connected to the affiliated STA 420 refers to a state in which the wireless link between the affiliated STA 420 and the shared AP 20 can be used for data exchange. Each affiliated STA 420 cannot be wirelessly connected simultaneously with a plurality of shared APs 20. For example, when the affiliated STA 420-1 is wirelessly connected to the shared AP 20-1, the affiliated STA 420-1 cannot be wirelessly connected to the shared AP 20-2.

The terminal 40 can wirelessly connect the plurality of affiliated STAs 420 to the plurality of shared APs 20 having different physical positions, and communicate with the sharing AP 10 via the plurality of wireless links. The terminal 40 switches a connection destination of each affiliated STA 420 according to a communication status with the AP system 30, thereby securing stable wireless connection with the AP system 30.

For example, as the terminal 40 moves to the right in Fig. 1, the power of a wireless signal from the shared AP 20-1 received by the affiliated STA 420-1 decreases, and the power of a wireless signal from the shared AP 20-3 received by the affiliated STA 420-1 increases. In response to the communication status, the non-AP MLD 410 switches the connection destination of the affiliated STA 420-1 from the shared AP 20-1 to the shared AP 20-3. A method of switching the connection destination of the affiliated STA 420 will be described below.

The following description will be given on the assumption that the three shared APs 20-1, 20-2, and 20-3 are provided in the AP system 30, and the two affiliated STAs 420-1 and 420-2 are provided in the terminal 40, as illustrated in Fig. 1.

Note that the AP system 30 can also be wirelessly connected to a legacy terminal that does not support the multi-AP connection.

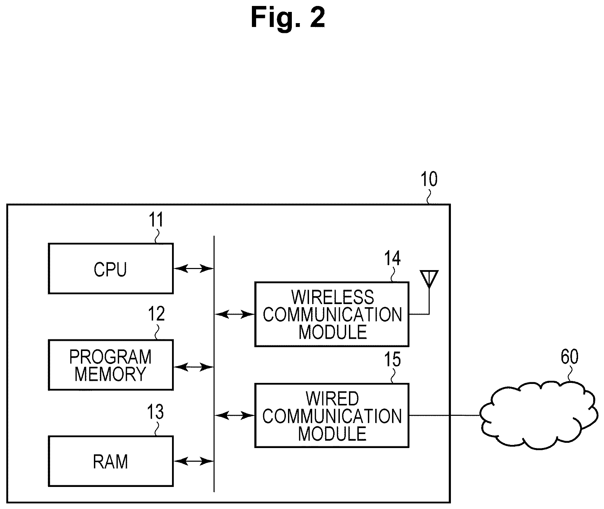

Fig. 2 schematically illustrates an example of a hardware configuration of the sharing AP 10. As illustrated in Fig. 2, the sharing AP 10 includes a central processing unit (CPU) 11, a program memory 12, a random access memory (RAM) 13, a wireless communication module 14, and a wired communication module 15 as hardware components. The CPU 11 is connected to a program memory 12, the RAM 13, the wireless communication module 14, and the wired communication module 15 via a bus.

The CPU 11 is an integrated circuit capable of executing various programs, and performs information processing. The program memory 12 is a nonvolatile semiconductor memory such as a read only memory (ROM) or a flash memory, and stores programs and data. The RAM 13 is, for example, a volatile semiconductor memory, and is used as a working area for the CPU 11. At least part of processing to be described with respect to the sharing AP 10 may be performed by the CPU 11 executing a program stored in the program memory 12.

The wireless communication module 14 is a circuit used to transmit and receive data by a wireless signal. The wireless communication module 14 includes a plurality of communication modules respectively corresponding to the plurality of affiliated STAs 420 as illustrated in Fig. 1, and each communication module is connected to an antenna corresponding to the communication module among a plurality of antennas. The wired communication module 15 is a circuit used to transmit and receive data by a wired signal, and is connected to the communication network 60.

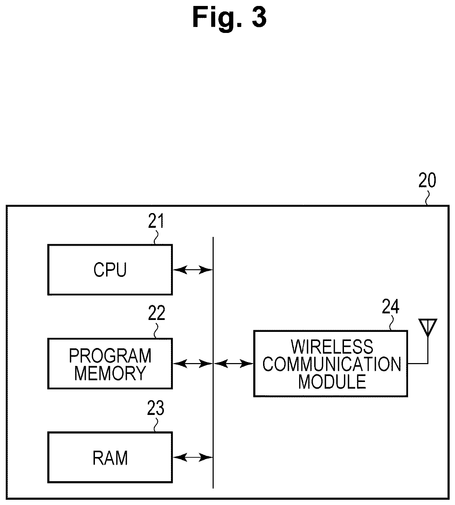

Fig. 3 schematically illustrates an example hardware configuration of the shared AP 20. The shared AP 20 illustrated in Fig. 3 corresponds to each of the shared APs 20-1, 20-2, and 20-3 illustrated in Fig. 1. As illustrated in Fig. 3, the shared AP 20 includes a CPU 21, a program memory 22, a RAM 23, and a wireless communication module 24 as hardware components. The CPU 21 is connected to the program memory 22, the RAM 23, and the wireless communication module 24 via a bus.

The CPU 21 is an integrated circuit capable of executing various programs, and performs information processing. The program memory 22 is a nonvolatile semiconductor memory such as a ROM or a flash memory, and stores programs and data. The RAM 23 is, for example, a volatile semiconductor memory, and is used as a working area for the CPU 21. At least part of processing to be described with respect to the shared AP 20 may be performed by the CPU 21 executing a program stored in the program memory 22.

The wireless communication module 24 is a circuit used to transmit and receive data by a wireless signal. The wireless communication module 24 includes one or a plurality of communication modules used to communicate with the shared AP 20 and the terminal 40, and each communication module is connected to a corresponding antenna.

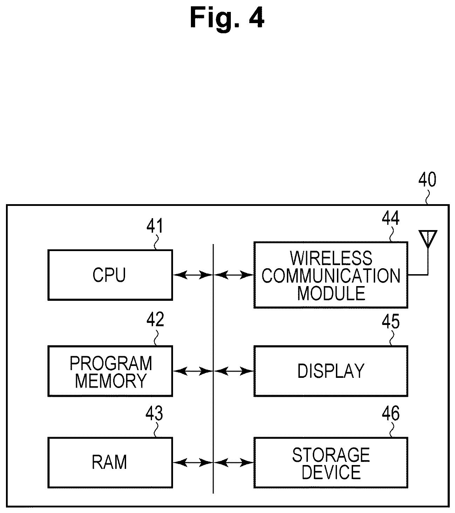

Fig. 4 schematically illustrates an example of a hardware configuration of the terminal 40. As illustrated in Fig. 4, the terminal 40 includes a CPU 41, a program memory 42, a RAM 43, a wireless communication module 44, a display 45, and a storage device 46 as hardware components.

The CPU 41 is an integrated circuit capable of executing various programs, and performs information processing. The program memory 42 is a nonvolatile semiconductor memory such as a ROM, and stores programs and data. The storage device 46 may be used as the program memory 42. The RAM 43 is, for example, a volatile semiconductor memory, and is used as a working area for the CPU 41. At least part of processing to be described with respect to the terminal 40 may be performed by the CPU 41 executing a program stored in the program memory 42.

The wireless communication module 44 is a circuit used to transmit and receive data by a wireless signal. The wireless communication module 44 includes a plurality of communication modules respectively corresponding to the plurality of affiliated STAs 420 as illustrated in Fig. 1, and each communication module is connected to an antenna corresponding to the communication module among a plurality of antennas. The display 45 displays information of a graphical user interface (GUI) provided by application software, or the like, for example. The display 45 may have a function as an input interface of the terminal 40. For example, a touch panel may be provided on the display 45. The storage device 46 is a nonvolatile storage device, and stores data including system software and the like of the terminal 40, for example.

The hardware configuration illustrated in Fig. 4 is one example, and the terminal 40 may have a hardware configuration different from that illustrated in Fig. 4. For example, in a case where the terminal 40 is an IoT device or the like, the display 45 may be omitted from the terminal 40.

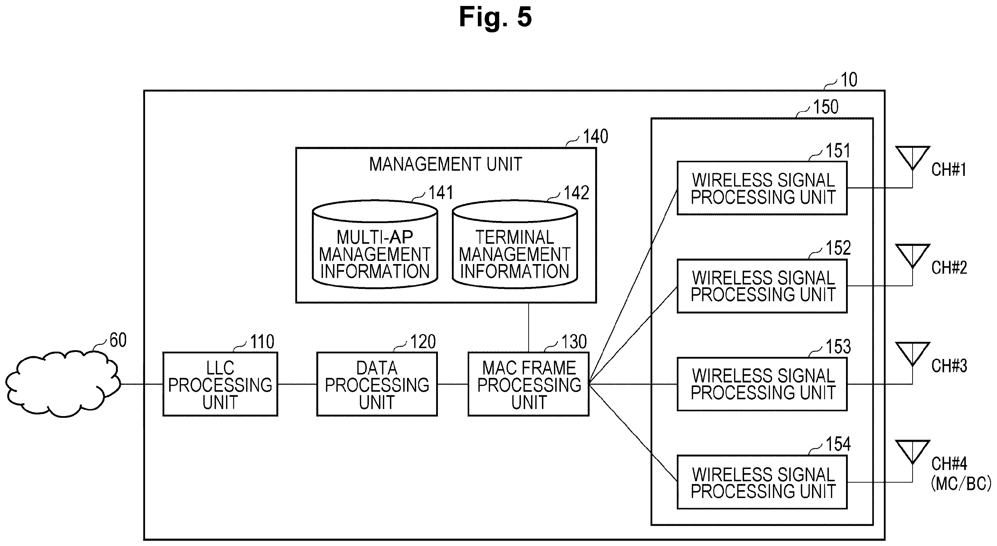

Fig. 5 schematically illustrates an example of a functional configuration of the sharing AP 10. As illustrated in Fig. 5, the sharing AP 10 includes an LLC processing unit 110, a data processing unit 120, a MAC frame processing unit 130, a management unit 140, and a communication unit 150. The LLC processing unit 110 may be implemented by a combination of the CPU 11 and the wired communication module 15. The data processing unit 120, the MAC frame processing unit 130, the management unit 140, and the communication unit 150 may be implemented by the wireless communication module 14 or a combination of the CPU 11 and the wireless communication module 14.

The LLC processing unit 110 executes processing of the LLC layer and processing of the higher-level layers (third layer to seventh layer) for an input signal. For example, the LLC processing unit 110 receives data from the communication network 60, adds a DSAP, an SSAP header, and the like to the received data to generate an LLC packet, and sends the generated LLC packet to the data processing unit 120. In addition, the LLC processing unit 110 receives an LLC packet from the data processing unit 120, extracts data from the received LLC packet, and transmits the extracted data to the communication network 60.

The data processing unit 120 receives the LLC packet from the LLC processing unit 110, adds a MAC header to the received LLC packet to generate a MAC frame, and sends the generated MAC frame to the MAC frame processing unit 130. Further, the data processing unit 120 receives a MAC frame from the MAC frame processing unit 130, extracts the LLC packet from the received MAC frame, and sends the extracted LLC packet to the LLC processing unit 110.

The MAC frame processing unit 130 receives the MAC frame from the data processing unit 120, and sends the received MAC frame to the communication unit 150. Further, the MAC frame processing unit 130 receives a MAC frame from the communication unit 150, and sends the received MAC frame to the data processing unit 120 or the management unit 140 according to a type of the received MAC frame. For example, the MAC frame processing unit 130 sends the MAC frame to the data processing unit 120 in a case where the MAC frame is a data frame, and sends the MAC frame to the management unit 140 in a case where the MAC frame is a management frame or a control frame.

The communication unit 150 wirelessly communicates with the plurality of shared APs 20 included in the AP system 30. The communication unit 150 includes wireless signal processing units 151, 152, and 153 configured to respectively and wirelessly communicate with the shared APs 20-1, 20-2, and 20-3, and a wireless signal processing unit 154 configured to wirelessly communicate with the shared APs 20-1, 20-2, and 20-3. The shared AP 20-1 can communicate on a first frequency channel (CH#1) and a fourth frequency channel (CH#4), the shared AP 20-2 can communicate on a second frequency channel (CH#2) and the fourth frequency channel (CH#4), and the shared AP 20-3 can communicate on a first frequency channel (CH#3) and the fourth frequency channel (CH#4). Note that the fourth frequency channel may be different from the first to third frequency channels, or may be the same as any of the first to third frequency channels. As frequency bands that can be used by the AP system 30, for example, a 2.4 GHz band, a 5 GHz band, a 6 GHz band, a 45 GHz band, and a 60 GHz band are assumed. The first frequency channel belongs to any of these frequency bands, the second frequency channel belongs to any of these frequency bands, the third frequency channel belongs to any of these frequency bands, and the fourth frequency channel belongs to any of these frequency bands. The first to fourth frequency channels may belong to different frequency bands, and some or all of the first to fourth frequency channels may belong to the same frequency band.

The wireless link between wireless signal processing unit 151 and the shared AP 20-1 is established in advance, and the wireless signal processing unit 151 communicates with the shared AP 20-1 with the established wireless link on the first frequency channel (CH#1). The wireless signal processing unit 151 executes physical layer processing for the input MAC frame or wireless signal. The wireless signal processing unit 151 receives the MAC frame from the MAC frame processing unit 130, adds a preamble, a PHY header, and the like to the received MAC frame to generate a wireless frame, converts the wireless frame into a wireless signal by performing predetermined modulation processing, and emits the wireless signal via an antenna. The modulation processing includes convolutional coding, interleaving, subcarrier modulation, inverse fast Fourier transform (IFFT), orthogonal frequency division multiplexing (OFDM) modulation, and frequency transform, for example. Further, the wireless signal processing unit 151 receives a wireless signal from the shared AP 20-1 via an antenna, and performs predetermined demodulation processing for the received wireless signal to obtain a wireless frame. The predetermined demodulation processing includes frequency transform, OFDM demodulation, fast Fourier transform (FFT), subcarrier demodulation, deinterleaving, and Viterbi decoding, for example. Then the wireless signal processing unit 151 extracts the MAC frame from the wireless frame, and sends the extracted MAC frame to the MAC frame processing unit 130.

The wireless link between wireless signal processing unit 152 and the shared AP 20-2 is established in advance, and the wireless signal processing unit 152 communicates with the shared AP 20-2 with the established wireless link on the second frequency channel (CH#2). The wireless link between wireless signal processing unit 153 and the shared AP 20-3 is established in advance, and the wireless signal processing unit 153 communicates with the shared AP 20-3 with the established wireless link on the third frequency channel (CH#3). Since the wireless signal processing units 152 and 153 perform processing similar to the wireless signal processing unit 151, detailed description of the wireless signal processing units 152 and 153 is omitted.

In this manner, each of the wireless signal processing units 151, 152, and 153 wirelessly communicates with the corresponding shared AP 20 on a one-to-one basis.

The wireless signal processing unit 154 is used to transmit the MAC frame to be transmitted to all the shared APs 20, such as an association notification. The wireless links between the wireless signal processing unit 154 and the shared APs 20-1, 20-2, and 20-3 are established in advance, and the wireless signal processing unit 154 communicates with the shared APs 20-1, 20-2, and 20-3 on the fourth frequency channel (CH#4). The wireless signal processing unit 154 transmits the MAC frame to the shared APs 20-1, 20-2, and 20-3 by multicast or broadcast. The transmission by multicast or broadcast is performed by, for example, designating some or all of the MAC addresses of the shared APs 20-1, 20-2, and 20-3 in the MAC frame as receiver addresses and transmitting the MAC frame on the frequency channel common to the shared APs 20-1, 20-2, and 20-3. Alternatively, the transmission by multicast or broadcast may be performed by specifying a multicast address or a broadcast address as a receiver address in the MAC frame, and transmitting the MAC frame on the frequency channel common to the shared APs 20-1, 20-2, and 20-3. Since the wireless signal processing unit 154 performs processing similar to the wireless signal processing unit 151, detailed description of the wireless signal processing unit 154 is omitted.

Note that the wireless signal processing units 151, 152, and 153 may be deleted from the communication unit 150. In this case, the wireless signal processing unit 154 is also used to individually communicate with the shared APs 20-1, 20-2, and 20-3. For example, the wireless signal processing unit 154 transmits the MAC frame to any one of the shared APs 20 by unicast. The transmission by unicast is performed by, for example, designating one MAC address of the shared APs 20-1, 20-2, and 20-3 as a receiver address in the MAC frame.

Alternatively, the wireless signal processing unit 154 may be deleted from the communication unit 150. The MAC frames to be transmitted to all shared APs 20 will also be individually transmitted to the shared APs 20-1, 20-2, and 20-3, using the wireless signal processing units 151, 152, and 153.

The management unit 140 controls or manages connection between the sharing AP 10 and a terminal such as the terminal 40 illustrated in Fig. 1. The management unit 140 manages multi-AP management information 141 that is information related to the AP system 30 and terminal management information 142 that is information related to the terminal whose connection to the sharing AP 10 is established.

The multi-AP management information 141 includes information regarding the sharing AP 10 and information regarding all the shared APs 20 belonging to the sharing AP 10. The information regarding the sharing AP 10 includes, for example, an identifier of the sharing AP 10 and capability information. The information regarding each shared AP 20 includes an identifier of the shared AP 20 and information indicating the frequency channel and operation parameters to be used. For example, the MAC address may be used as the identifier. Here, the identifier of the sharing AP 10 is referred to as SharingAP#1, and the identifiers of the shared APs 20-1, 20-2, and 20-3 are referred to as SharedAP#1, SharedAP#2, and SharedAP#3. The capability information is information indicating whether the multi-AP connection is supported. Here, since the AP system 30 supports multi-AP connection, the capability information is set to a value indicating that the multi-AP connection is supported. The operation parameters include a plurality of parameters used for channel access control, such as a TXOP limit.

The management unit 140 notifies the shared APs 20-1, 20-2, and 20-3 of the multi-AP management information 141. Specifically, the management unit 140 generates a management frame including the multi-AP management information 141, and transmits the generated management frame using the wireless signal processing unit 154. The shared APs 20-1, 20-2, and 20-3 transmit beacon frames including the multi-AP management information 141 in order to inform the presence of the AP system 30.

Upon receiving an association request from the terminal 40, the management unit 140 sets up a connection between the AP system 30 and the terminal. For example, the management unit 140 receives a multi-AP association request for requesting establishment of the multi-AP connection from the terminal 40, and executes association processing in order to establish the multi-AP connection between the sharing AP 10 and the non-AP MLD 410 of the terminal 40. In the association processing, the management unit 140 transmits the association notification including information regarding the terminal 40 that has transmitted the association request to the shared AP 20.

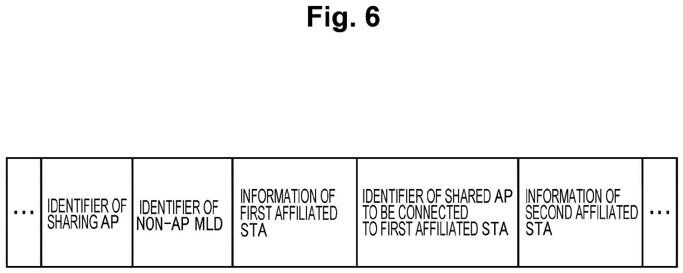

Fig. 6 schematically illustrates an example of a format of the association notification. As illustrated in Fig. 6, the association notification includes the identifier of the sharing AP, information regarding the non-AP MLD 410 of the terminal 40, information regarding each of the affiliated STAs 420 belonging to the non-AP MLD 410, and information indicating the shared AP 20 serving as a connection destination of each of the affiliated STAs 420. The information regarding the non-AP MLD 410 includes, for example, an identifier of the non-AP MLD 410. The identifier of the non-AP MLD 410 may be, for example, the MAC address allocated to the non-AP MLD 410. Here, the identifier of the non-AP MLD 410 is referred to as Non-AP MLD #1. The information regarding the affiliated STA 420 includes, for example, an identifier of the affiliated STA 420. The identifier of the affiliated STA 420 may be, for example, the MAC address allocated to the affiliated STA 420. Here, the identifiers of the affiliated STAs 420-1 and 420-2 are referred to as Affiliated STA #1 and Affiliated STA #2.

The terminal management information 142 includes information regarding the non-AP MLD 410 connected to the sharing AP 10, information indicating via which shared AP 20 the sharing AP 10 is connected to the terminal 40, and information indicating the affiliated STA 420 wirelessly connected to each shared AP 20. For example, the terminal management information 142 includes the identifier of the non-AP MLD 410 connected to the sharing AP 10, the identifier of the shared AP 20 gone through in the connection with the terminal 40, and the identifier of the affiliated STA 420 wirelessly connected to the shared AP 20. The identifier may be, for example, the MAC address.

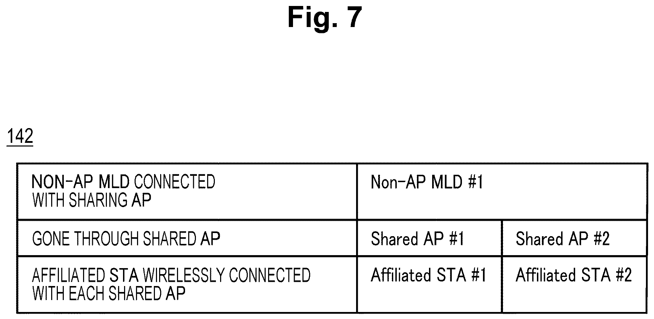

Fig. 7 illustrates an example of the terminal management information 142. In the example illustrated in Fig. 7, the terminal management information 142 indicates that the sharing AP 10 is connected to the non-AP MLD 410 illustrated in Fig. 1, the shared AP 20-1 is wirelessly connected to the affiliated STA 420-1, and the shared AP 20-2 is wirelessly connected to the affiliated STA 420-2.

The terminal management information 142 is given to the MAC frame processing unit 130. The terminal management information 142 is used by the MAC frame processing unit 130 to distribute the MAC frame to any one of the wireless signal processing units 151 to 154. For example, in a case where the shared AP 20-1 is wirelessly connected to the affiliated STA 420-1 of the terminal 40, and the shared AP 20-2 is wirelessly connected to the affiliated STA 420-2 of the terminal 40, the shared AP 20-3 is not wirelessly connected to any of the affiliated STAs 420 of the terminal 40. In this case, the MAC frame processing unit 130 sends the data frame addressed to the terminal 40 to the wireless signal processing unit 151 or the wireless signal processing unit 152.

Note that, in the terminal management information 142, a traffic identifier (TID) may be associated with each shared AP 20. For example, it is assumed that TID#1 is associated with the shared AP 20-1 and TID#2 is associated with the shared AP 20-2. When receiving the MAC frame from the data processing unit 120, the MAC frame processing unit 130 checks the TID assigned to the data included in the received MAC frame. The MAC frame processing unit 130 sends the MAC frame to the wireless signal processing unit 151 in a case where the TID of the data is TID#1, and sends the MAC frame to the wireless signal processing unit 152 in a case where the TID of the data is TID#2. Note that a plurality of TIDs may be associated with each shared AP 20. For example, TID#1 and TID#2 may be associated with the shared AP 20-1, and TID#3, TID#4, and TID#5 may be associated with the shared AP 20-2.

The management unit 140 receives, from the terminal 40, a handover request for requesting switching of the connection destination of the affiliated STA 420. The management unit 140 executes handover processing in response to the handover request. Details of the handover processing will be described below.

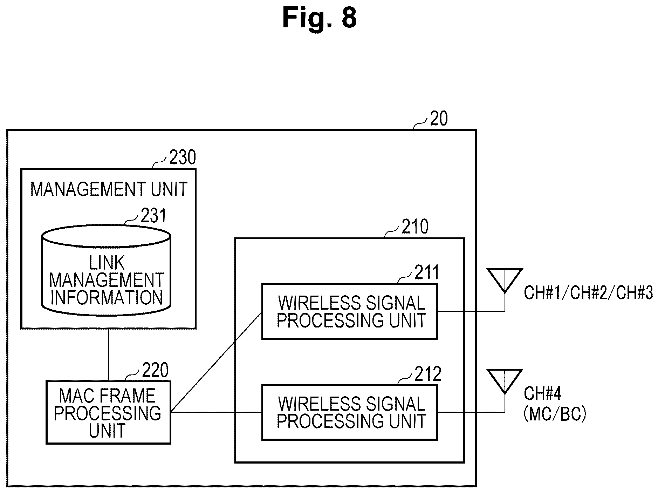

Fig. 8 schematically illustrates an example of a functional configuration of the shared AP 20. The shared AP 20 illustrated in Fig. 8 corresponds to each of the shared APs 20-1, 20-2, and 20-3 illustrated in Fig. 1. As illustrated in Fig. 8, the shared AP 20 includes a communication unit 210, a MAC frame processing unit 220, and a management unit 230. The communication unit 210, the MAC frame processing unit 220, and the management unit 230 may be implemented by a combination of the CPU 21 and the wireless communication module 24.

The communication unit 210 wirelessly communicates with the sharing AP 10 and the terminal 40. The communication unit 210 includes wireless signal processing units 211 and 212. The wireless signal processing unit 211 is used for communication with the terminal 40, and the wireless signal processing unit 212 is used for communication with the sharing AP 10. In a case where the shared AP 20 illustrated in Fig. 8 is the shared AP 20-1 illustrated in Fig. 1, the wireless signal processing unit 211 performs communication on the first frequency channel (CH#1). In a case where the shared AP 20 illustrated in Fig. 8 is the shared AP 20-2 illustrated in Fig. 1, the wireless signal processing unit 211 performs communication on the second frequency channel (CH#2). In a case where the shared AP 20 illustrated in Fig. 8 is the shared AP 20-3 illustrated in Fig. 1, the wireless signal processing unit 211 performs communication on the third frequency channel (CH#3). The wireless signal processing unit 212 performs communication on the fourth frequency channel (CH#4).

The wireless signal processing unit 211 executes physical layer processing for the MAC frame or the wireless signal. The wireless signal processing unit 211 receives the MAC frame addressed to the terminal 40 from the MAC frame processing unit 220, adds a preamble, a PHY header, and the like to the received MAC frame to generate a wireless frame, converts the wireless frame into a wireless signal by performing predetermined modulation processing, and emits the wireless signal via an antenna. Further, the wireless signal processing unit 211 receives a wireless signal from the terminal 40 via an antenna, and performs predetermined demodulation processing for the received wireless signal to obtain a wireless frame. Then the wireless signal processing unit 211 extracts the MAC frame from the wireless frame, and sends the extracted MAC frame to the MAC frame processing unit 220.

The wireless signal processing unit 212 executes physical layer processing for the MAC frame or the wireless signal. The wireless signal processing unit 212 receives the MAC frame addressed to the sharing AP 10 from the MAC frame processing unit 220, adds a preamble, a PHY header, and the like to the received MAC frame to generate a wireless frame, converts the wireless frame into a wireless signal by performing predetermined modulation processing, and emits the wireless signal via an antenna. Further, the wireless signal processing unit 211 receives a wireless signal from the sharing AP 10 via an antenna, and performs predetermined demodulation processing for the received wireless signal to obtain a wireless frame. Then the wireless signal processing unit 211 extracts the MAC frame from the wireless frame, and sends the extracted MAC frame to the MAC frame processing unit 220.

Note that the wireless signal processing unit 211 may also be used for communication with the sharing AP 10. For example, in a case where the shared AP 20 illustrated in Fig. 8 is the shared AP 20-1 illustrated in Fig. 1, the wireless link between wireless signal processing unit 211 and the wireless signal processing unit 151 of the shared AP 20-1 is established in advance, and the wireless signal processing unit 211 communicates with the shared AP 20-1 with the established wireless link on the first frequency channel (CH#1). For example, regarding the communication with the sharing AP 10, the wireless signal processing unit 211 may be used for transmission and reception of the data frame, and the wireless signal processing unit 212 may be used for transmission and reception of the management frame such as the association notification and a response to the association notification.

Further, in the embodiment in which the wireless signal processing unit 154 illustrated in Fig. 6 is deleted from the communication unit 150 of the sharing AP 10, the wireless signal processing unit 212 is deleted from the communication unit 210.

The MAC frame processing unit 220 receives the MAC frame transmitted by the sharing AP 10 from the wireless signal processing unit 212. In a case where the MAC frame is a data frame, the MAC frame processing unit 220 sends the MAC frame to the wireless signal processing unit 211. The MAC frame processing unit 220 sends the MAC frame to the management unit 230 in a case where the MAC frame is the management frame addressed to the shared AP 20, such as the association notification, and sends the MAC frame to the wireless signal processing unit 211 in a case where the MAC frame is the management frame addressed to the terminal 40, such as the multi-AP association response. Further, the MAC frame processing unit 220 receives the MAC frame transmitted by the terminal 40 from the wireless signal processing unit 211, and determines whether or not the received MAC frame is from the affiliated STA 420 wirelessly connected to the shared AP 20 on the basis of the notification from the management unit 230. The MAC frame processing unit 220 sends the MAC frame to the wireless signal processing unit 212 in a case where the MAC frame is from the affiliated STA 420 wirelessly connected to the shared AP 20, or discards the MAC frame otherwise. The MAC frame processing unit 220 receives management information such as a beacon from management unit 230, generates the management frame including the received management information, and sends the generated management frame to the wireless signal processing unit 212.

The management unit 230 receives the management information such as the multi-AP management information, the association notification, and handover notification from the sharing AP 10. For example, the wireless signal processing unit 212 receives a wireless signal from the sharing AP 10, obtains the management frame from the received wireless signal, and sends the management frame to the MAC frame processing unit 220. Subsequently, the MAC frame processing unit 220 extracts the management information from the management frame, and sends the extracted management information to the management unit 230.

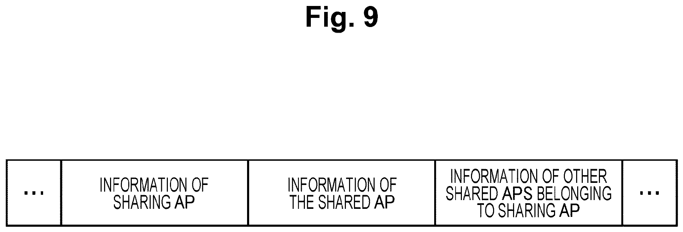

When receiving the multi-AP management information from the sharing AP 10, the management unit 230 generates a beacon frame on the basis of the received multi-AP management information, and sends the generated beacon frame to the MAC frame processing unit 220. As illustrated in Fig. 9, the beacon frame includes information regarding the sharing AP 10 to which the shared AP 20 belongs, information regarding the shared AP 20, and information regarding other shared APs 20 belonging to the sharing AP 10. The information regarding the sharing AP 10 includes the identifier of the sharing AP 10, the capability information, and the like. The information regarding the shared AP 20 includes the identifier of the shared AP 20, the frequency channel and the operation parameters to be used, and the like.

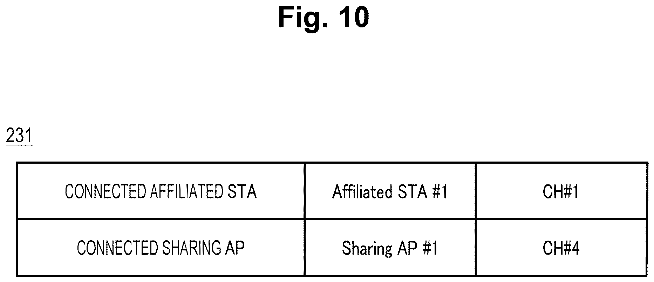

The management unit 230 manages the link management information 231 that is information regarding connection. As illustrated in Fig. 10, the link management information 231 includes the information regarding the sharing AP 10 to which the shared AP 20 belongs, information regarding the wirelessly connected affiliated STA 420, and the like. The information regarding the sharing AP 10 includes, for example, the identifier of the sharing AP 10 and information indicating the frequency channel used for communication with the sharing AP 10. The information regarding the affiliated STA includes the identifier of the affiliated STA and information indicating the frequency channel used for communication with the affiliated STA.

Referring back to Fig. 8, when receiving the association notification from the sharing AP 10, the management unit 230 determines whether or not the shared AP 20 is a target of connection with the terminal 40. In a case where the shared AP 20 is not a target of connection with the terminal 40, the management unit 230 does not respond to the association notification. In a case where the shared AP 20 is a target of connection with the terminal 40, the management unit 230 determines whether or not to accept a connection request, and transmits a response indicating the determination result to the sharing AP 10. When accepting the connection request, the management unit 230 updates the link management information 231. For example, the management unit 230 adds information regarding the affiliated STA 420 to be newly wirelessly connected to the link management information 231. The management unit 230 notifies the MAC frame processing unit 220 of the updated link management information 231.

When receiving the handover notification from the sharing AP 10, the management unit 230 determines whether or not the shared AP 20 is targeted for handover. In a case where the shared AP 20 is not targeted for handover, the management unit 230 does not respond to the handover notification. In a case where the shared AP 20 is targeted for handover, the management unit 230 determines whether or not to accept a handover request, and transmits a response indicating a determination result to the sharing AP 10. When accepting the request, the management unit 230 updates the link management information 231. For example, the management unit 230 adds information regarding the affiliated STA 420 to be newly wirelessly connected to the link management information 231. Alternatively, the management unit 230 deletes the information regarding the affiliated STA 420 whose wireless connection is to be released from the link management information 231. The management unit 230 notifies the MAC frame processing unit 220 of the updated link management information 231.

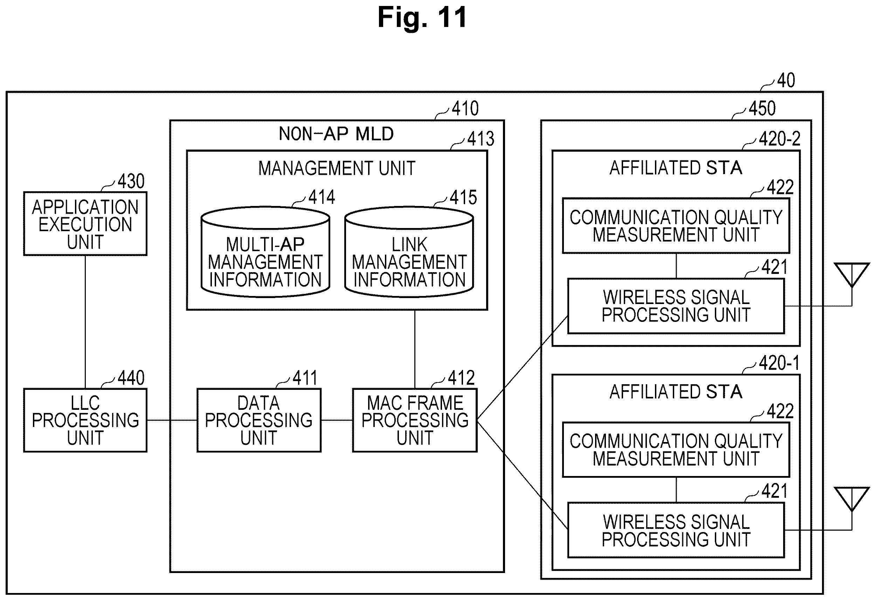

Fig. 11 schematically illustrates an example of a functional configuration of the terminal 40. As illustrated in Fig. 11, the terminal 40 includes an application execution unit 430 and an LLC processing unit 440 in addition to the non-AP MLD 410 and the affiliated STAs 420-1 and 420-2 illustrated in Fig. 1. The non-AP MLD 410 includes a data processing unit 411, a MAC frame processing unit 412, and a management unit 413. The affiliated STAs 420-1 and 420-2 are collectively referred to as a communication unit 450. The application execution unit 430 and the LLC processing unit 440 may be implemented by the CPU 41. The non-AP MLD 410 and the communication unit 450 may be implemented by the wireless communication module 44 or a combination of the CPU 41 and the wireless communication module 44.

The application execution unit 430 executes an application such as an application that exchanges data with a server on the communication network 60 illustrated in Fig. 1.

The LLC processing unit 440 executes processing of the LLC layer and the higher-level layer for input data. For example, the LLC processing unit 440 receives data from the application execution unit 430, adds a DSAP header, an SSAP header, and the like to the received data to generate an LLC packet, and sends the generated LLC packet to the data processing unit 411. In addition, the LLC processing unit 440 receives an LLC packet from the data processing unit 411, extracts data from the received LLC packet, and transmits the extracted data to the application execution unit 430.

The data processing unit 411 receives the LLC packet from the LLC processing unit 110, adds a MAC header to the received LLC packet to generate a MAC frame, and sends the generated MAC frame to the MAC frame processing unit 412. Further, the data processing unit 411 receives a MAC frame from the MAC frame processing unit 412, extracts the LLC packet from the received MAC frame, and sends the extracted LLC packet to the LLC processing unit 110.

The MAC frame processing unit 412 receives the MAC frame from the data processing unit 411, and sends the received MAC frame to the communication unit 450. Further, the MAC frame processing unit 412 receives a MAC frame from communication unit 450, and sends the received MAC frame to the data processing unit 411 or the management unit 413 according to the type of the received MAC frame. For example, the MAC frame processing unit 412 sends the MAC frame to the data processing unit 411 in a case where the MAC frame is a data frame, and sends the MAC frame to the management unit 413 in a case where the MAC frame is a management frame or a control frame.

The communication unit 450 wirelessly communicates with the AP system 30. The communication unit 450 includes the affiliated STAs 420-1 and 420-2. Each of the affiliated STAs 420-1 and 420 includes a wireless signal processing unit 421 and a communication quality measurement unit 422. The wireless signal processing unit 421 switches the frequency channel according to the connection destination.

The wireless signal processing unit 421 executes physical layer processing for the MAC frame or the wireless signal. The wireless signal processing unit 421 receives the MAC frame from the MAC frame processing unit 412, adds a preamble, a PHY header, and the like to the received MAC frame to generate a wireless frame, converts the wireless frame into a wireless signal by performing predetermined modulation processing, and emits the wireless signal via an antenna. Further, the wireless signal processing unit 421 receives a wireless signal from the AP system 30 via an antenna, and performs predetermined demodulation processing for the received wireless signal to obtain a wireless frame. Then the wireless signal processing unit 421 extracts the MAC frame from the wireless frame, and sends the extracted MAC frame to the MAC frame processing unit 412.

The communication quality measurement unit 422 measures communication quality of each of the shared APs 20 to be targets of multi-AP connection (specifically, each of the shared APs 20-1, 20-2, and 20-3) from the wireless signal received by an antenna, and notifies a measurement result to 413. The communication quality measurement unit 422 measures, as the communication quality, an index indicating reception power from each of the shared APs 20, such as a received signal strength indicator (RSSI).

The management unit 413 manages connection with an access point of a wireless LAN such as the AP system 30. For example, the management unit 413 manages multi-AP management information 414 including information regarding the sharing AP 10 for which the multi-AP connection is established and information regarding all the shared APs 20 belonging to the sharing AP 10. The information regarding the sharing AP 10 includes, for example, the identifier of the sharing AP 10. The information regarding the shared AP 20 includes, for example, the identifier of the shared AP 20.

The management unit 413 manages link management information 415 that is information regarding the shared AP 20 wirelessly connected to each affiliated STA 420 belonging to the non-AP MLD 410. The link management information 415 includes, for example, the identifier of the shared AP 20 wirelessly connected to the affiliated STA 420-1 and the identifier of the shared AP 20 wirelessly connected to the affiliated STA 420-2.

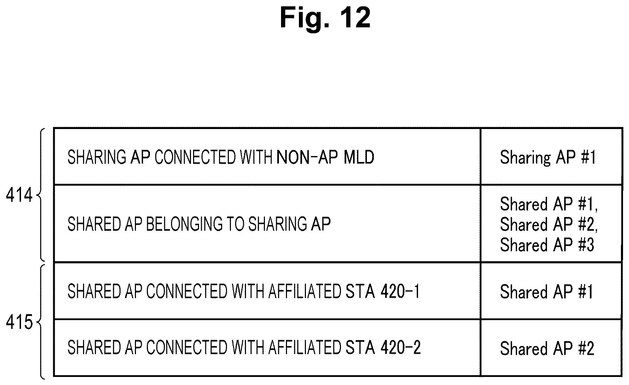

Fig. 12 schematically illustrates an example of the multi-AP management information 414 and the link management information 415. In the example illustrated in Fig. 12, the multi-AP management information 414 indicates that the multi-AP connection is established between the non-AP MLD 410 and the sharing AP 10, and the shared APs 20-1, 20-2, and 20-3 belong to the sharing AP 10. The link management information 415 indicates that the affiliated STA 420-1 is wirelessly connected to the shared AP 20-1, and the affiliated STA 420-2 is wirelessly connected to the shared AP 20-2.

Referring back to Fig. 11, the management unit 413 receives the measurement result indicating the communication quality of each of the shared APs 20 from the communication quality measurement unit 422 of each of the affiliated STAs 420. For example, the measurement result obtained by the communication quality measurement unit 422 of the affiliated STA 420-1 includes information indicating the reception power of the signal from the shared AP 20-1 received by the wireless signal processing unit 421 of the affiliated STA 420-1, information indicating the reception power of the signal from the shared AP 20-2 received by the wireless signal processing unit 421 of the affiliated STA 420-1, and information indicating the reception power of the signal from the shared AP 20-3 received by the wireless signal processing unit 421 of the affiliated STA 420-1. The management unit 413 determines the connection destination of each of the affiliated STAs 420 from among the shared APs 20 from which each of the affiliated STAs 420 has received the beacon frame on the basis of the received measurement result.

The management unit 413 transmits the multi-AP association request for requesting establishment of the multi-AP connection to the sharing AP 10 using any of the affiliated STAs 420. The multi-AP association request includes information designating the connection destination of each affiliated STA 420. The management unit 413 receives a response to the multi-AP association request from the sharing AP 10, establishes the multi-AP connection with the sharing AP 10 according to the received response, and updates the link management information 415.

In a case where the communication quality of the wireless link between the affiliated STA 420 and the shared AP 20 has deteriorated, the management unit 413 transmits to the sharing AP 10 the handover request for requesting switching of the connection destination of the affiliated STA 420. The handover request includes, for example, the identifier of the affiliated STA 420 requesting the change of the connection destination, the identifier of the shared AP that is the current connection destination of the affiliated STA 420, and information specifying a new connection destination of the affiliated STA 420. The handover request may be transmitted using the affiliated STA 420 targeted for handover, or may be transmitted using another affiliated STA 420. The management unit 413 receives a response to the handover request from the sharing AP 10, notifies the affiliated STA 420 of the new connection destination and the frequency channel to be used according to the received response, and updates the link management information 415.

As described above, the management unit 413 first establishes the multi-AP connection between the terminal 40 and the AP system 30 (specifically, comprehensive connection between all the affiliated STAs 420 belonging to the terminal 40 and all the shared APs 20 belonging to the AP system 30). As a result, it is possible to switch the connection destination of the affiliated STA 420 without a direct connection procedure between the affiliated STA 420 and the shared AP 20 at the time of handover.

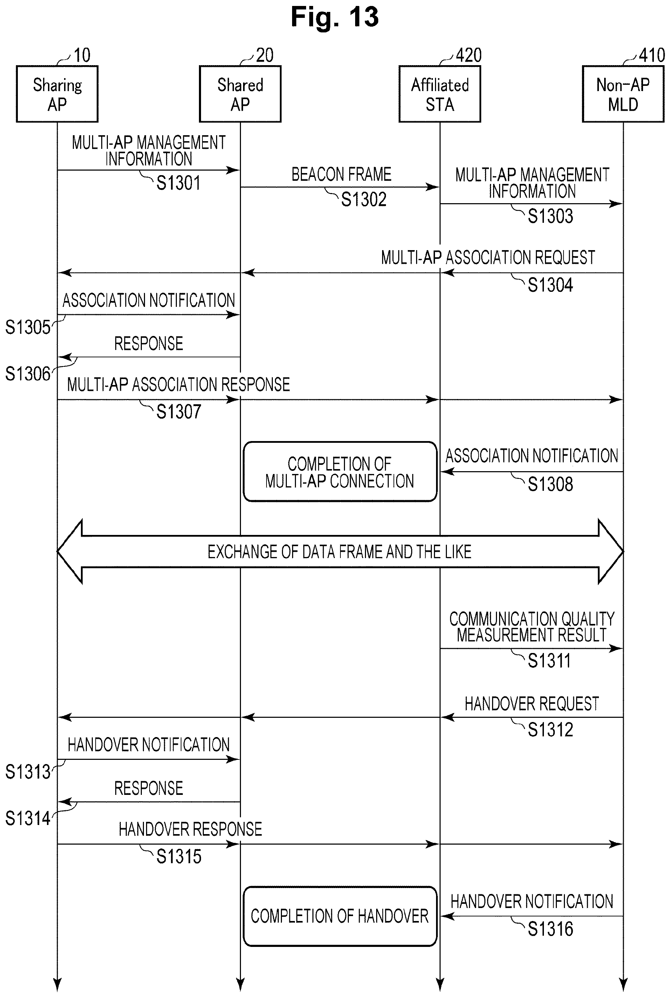

Fig. 13 schematically illustrates a procedure example of wireless communication processing including the association processing and the handover processing. The AP system 30 includes the sharing AP 10 and the plurality of shared APs 20, the terminal 40 includes the non-AP MLD 410 and the plurality of affiliated STAs 420, and Fig. 13 illustrates one shared AP 20 and one affiliated STA 420 as representatives.

First, the association processing will be described.

In step S1301, the sharing AP 10 transmits the multi-AP management information to the shared AP 20 by multicast or broadcast, and each of the shared APs 20 receives the multi-AP management information. The multi-AP management information includes, for example, the identifier of the sharing AP 10, the identifiers of all the shared APs 20 belonging to the sharing AP 10, the information indicating the frequency channel and the operation parameters of each shared AP 20, and the capability information.

In step S1302, each of the shared APs 20 generates the beacon frame including the received multi-AP management information, and periodically transmits the generated beacon frame. When the terminal 40 moves, the beacon frame transmitted from any of the shared APs 20 is detected by the terminal 40.

In step S1303, the affiliated STA 420 receives the beacon frame from the shared AP 20, and outputs the received beacon frame to the non-AP MLD 410. The non-AP MLD 410 receives the beacon frame from the affiliated STA 420, and acquires the multi-AP management information from the received beacon frame.

In step S1304, the non-AP MLD 410 generates the multi-AP association request for requesting establishment of the multi-AP connection on the basis of the acquired multi-AP management information, and transmits the generated multi-AP association request to the sharing AP 10 using any of the affiliated STAs 420. For example, the affiliated STA 420 that has received the beacon frame from the shared AP 20 is used to transmit the multi-AP association request. The shared AP 20 receives the multi-AP association request from the terminal 40 and transmits the received multi-AP association request to the sharing AP 10. Thereby, the sharing AP 10 receives the multi-AP association request. The multi-AP association request includes the identifier of the non-AP MLD 410, the identifiers of all the affiliated STAs 420 belonging to the non-AP MLD 410, and the information specifying the connection destination of at least one affiliated STA 420.

In step S1305, the sharing AP 10 generates the association notification on the basis of the received multi-AP association request, and transmits the generated association notification to the shared APs 20 by multicast or broadcast, and each of the shared APs 20 receives the association notification. The association notification includes, for example, the identifier of the non-AP MLD 410, the identifiers of all the affiliated STAs 420 belonging to the non-AP MLD 410, and the identifier of the shared AP 20 designated as the connection destination of at least one affiliated STA.

In step S1306, the shared AP 20 designated as the connection destination of the affiliated STA transmits a response to the received association notification to the sharing AP 10, and the sharing AP 10 receives the response. Further, the shared AP 20 updates the link management information 231 on the basis of the received association notification. For example, the shared AP 20 writes the identifier of the affiliated STA 420 to be the connection destination of the shared AP 20 in the link management information 231. The shared AP 20 that is not designated as the connection destination of the affiliated STA ignores the received association notification.

In step S1307, the sharing AP 10 transmits the multi-AP association response to the non-AP MLD 410 in response to reception of the response from the shared AP 20. The multi-AP association response is a response to the multi-AP association request, and is a management frame that notifies acceptance of establishment of the multi-AP connection. The sharing AP 10 transmits the multi-AP association response to the shared AP 20 by multicast or broadcast. Alternatively, the sharing AP 10 may transmit the multi-AP association response to the shared AP 20 that has received the multi-AP association request. The multi-AP association response reaches the non-AP MLD 410 via the shared AP 20 and the affiliated STA 420.

In step S1308, the non-AP MLD 410 outputs the association notification to the affiliated STA 420 in response to reception of the multi-AP association response from the sharing AP 10. The affiliated STA 420 sets the connection destination and the frequency channel on the basis of the received association notification.

In this way, the multi-AP connection is established between the sharing AP 10 and the non-AP MLD 410, at least one of the wireless links included in the established multi-AP connection is set to be usable for data exchange, and the rest is set to be unusable for data exchange. The non-AP MLD 410 and the sharing AP 10 exchange the data frames using the affiliated STA 420 and the shared AP 20 that are wirelessly connected.

Next, the handover processing will be described.
Here, it is assumed that two wireless links are used for data exchange. For example, the affiliated STA 420-1 is wirelessly connected to the shared AP 20-1, and the affiliated STA 420-2 is wirelessly connected to the shared AP 20-2.

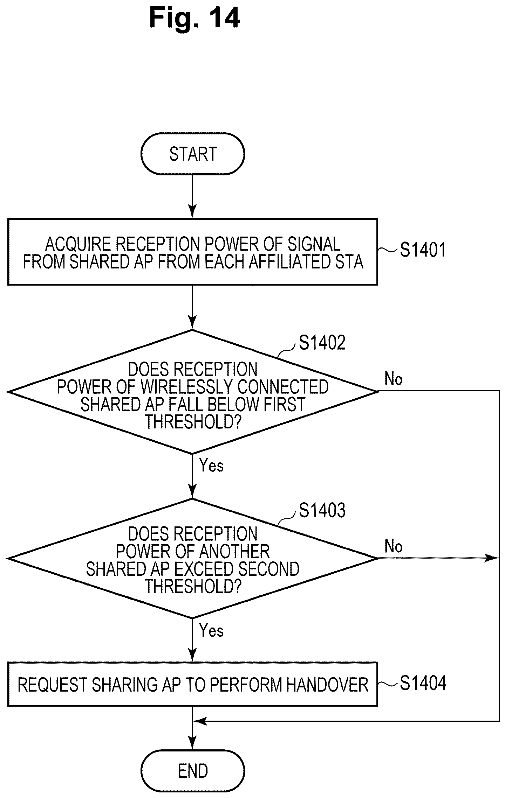

In step S1311, the non-AP MLD 410 acquires the measurement result of the communication quality from each of the affiliated STAs 420. For example, each of the affiliated STAs 420 monitors the reception power of the wireless signal from each of the shared APs 20, and outputs the measurement result indicating the reception power of the wireless signal from each of the shared APs 20 to the non-AP MLD 410. The non-AP MLD 410 determines whether or not to execute the handover processing for each affiliated STA 420 on the basis of the measurement result. Details of the determination method will be described below with reference to Fig. 14. Here, it is assumed that the non-AP MLD 410 determines to execute the handover processing for a certain affiliated STA 420.

In step S1312, the non-AP MLD 410 transmits, to the sharing AP 10, the handover request for requesting switching of the connection destination of the affiliated STA 420. The handover request includes the identifier of the affiliated STA 420 targeted for handover, the identifier of the shared AP 20 that is the current connection destination of the affiliated STA 420, and the identifier of the shared AP 20 designated as the new connection destination of the affiliated STA 420. The handover request reaches the sharing AP 10 via one of the affiliated STAs 420 and one of the shared APs 20.

In step S1313, the sharing AP 10 generates the handover notification on the basis of the received handover request, and transmits the generated handover notification to the shared AP 20 by multicast or broadcast. The handover notification gives an instruction as to from which shared AP 20 to which shared AP 20 the connection destination of the affiliated STA 420 targeted for handover is switched. The handover notification may include information similar to the information included in the handover request. For example, the handover notification includes the identifier of the affiliated STA 420 targeted for handover, the identifier of the shared AP 20 that is the current connection destination of the affiliated STA 420, and the identifier of the shared AP 20 designated as the new connection destination of the affiliated STA 420. It is possible to perform handover without performing a connection procedure in a wireless section by the sharing AP 10 transmitting the handover notification to the shared AP 20.

In step S1314, the shared AP 20 that is the current connection destination and the shared AP 20 designated as the new connection destination transmit a handover response to the sharing AP 10. Furthermore, the shared AP 20, which is the current connection destination, deletes the information regarding the affiliated STA 420 targeted for handover from the link management information 231. That is, the shared AP 20, which is the current connection destination, changes the wireless link with the affiliated STA 420 targeted for handover, to an unusable state for data exchange. The shared AP 20 designated as the new connection destination writes the identifier of the affiliated STA 420 to be the connection destination thereof in the link management information 231. That is, the shared AP 20 designated as the new connection destination changes the wireless link with the affiliated STA 420 targeted for handover to a usable state for data exchange.

In step S1315, the sharing AP 10 transmits the handover response to the non-AP MLD 410 in response to reception of the response from the shared AP 20. The handover response is a response to the handover request, and is a management frame that notifies acceptance of the handover. The sharing AP 10 transmits the handover response to the shared AP 20 by multicast or broadcast. Alternatively, the sharing AP 10 may transmit the handover response to the shared AP 20 that has received the handover request. The handover response reaches the non-AP MLD 410 via the shared AP 20 and the affiliated STA 420.

In step S1316, the non-AP MLD 410 outputs the handover notification to the affiliated STA 420 targeted for handover, and updates the link management information 415 in response to reception of the handover response from the sharing AP 10. The non-AP MLD 410 updates the link management information 415 so as to delete the identifier of the shared AP 20 that is the current connection destination and write the identifier of the shared AP 20 that will be the new connection destination for the affiliated STA 420 targeted for handover. The non-AP MLD 410 notifies the affiliated STA 420 targeted for handover of release of the connection with the shared AP 20 that is the current connection destination and use of the connection with the shared AP 20 that is the new connection destination with the handover by the handover notification. It is possible to perform handover without performing a connection procedure in a wireless section by the sharing AP 10 transmitting the handover notification to the shared AP 20.

Note that, in the above-described handover processing, the sharing AP 10 may include timing information indicating timing of switching the wireless link used for data exchange in the handover notification and the handover response. The shared AP 20 updates the link management information at the timing indicated by the timing information, and the affiliated STA 420 sets the connection destination and the frequency channel at the timing indicated by the timing information. The timing of switching the wireless link to be used for data exchange may be determined by each of the shared AP 20 and the affiliated STA 420 according to, for example, a rule based on transmission of the handover response. For example, the shared AP 20 updates the link management information at timing when the beacon frame is transmitted N times after transmission of the handover response, and the affiliated STA 420 performs setting at timing when the beacon frame is received N times from the shared AP 20 after reception of the handover response. In another example, the shared AP 20 updates the link management information at timing when a predetermined time has elapsed since the transmission of the handover response, and the affiliated STA 420 performs setting at timing when a predetermined time has elapsed since the reception of the handover response (countdown method). As a result, the shared AP 20 and the affiliated STA 420 can simultaneously change settings, and can smoothly switch the wireless link to be used.

In this way, the handover processing of switching the connection destination of the affiliated STA 420 is completed. Since the wireless link different from the currently used wireless link is also established at the time of establishing the multi-AP connection, it is not necessary to go through the association procedure again.

Note that the transmission of information (for example, the association notification or the handover notification) from the sharing AP 10 to each of the shared APs 20 is not limited to being performed by multicast or broadcast. The management unit 140 of the sharing AP 10 may transmit the information to each shared AP 20 by unicast. Specifically, the management unit 140 may transmit the information to the shared AP 20-1 using the wireless signal processing unit 151, to the shared AP 20-2 using the wireless signal processing unit 152, and to the shared AP 20-3 using the wireless signal processing unit 153.

Fig. 14 schematically illustrates a procedure example of the determination processing executed by the non-AP MLD 410. The determination processing illustrated in Fig. 14 can be executed when two or more wireless links are used for data exchange.

In step S1401, the non-AP MLD 410 acquires the measurement result indicating the reception power of the signal from each shared AP 20 from each of the affiliated STAs 420.

In step S1402, the non-AP MLD 410 determines whether or not the reception power of the signal from the shared AP 20 wirelessly connected to the affiliated STA 420 falls below a first threshold. The processing illustrated in Fig. 1402 is performed for each of the affiliated STAs 420 wirelessly connected to the shared AP 20.

In a case where the reception power does not fall below the first threshold (step S1402; No), the flow ends. For example, after a predetermined time has elapsed, the determination processing is executed again.

In a case where the reception power falls below the first threshold (step S1402; Yes), the flow proceeds to step S1403. In step S1403, the non-AP MLD 410 determines whether the reception power of the signal from another shared AP 20 exceeds a second threshold. The second threshold may be the same as or different from the first threshold. Here, the another shared AP 20 refers to the shared AP 20 that is not wirelessly connected to any of the affiliated STAs 420.

In a case where the reception power of the signal from the another shared AP 20 does not exceed the second threshold (step S1403; No), the flow ends. For example, after a predetermined time has elapsed, the determination processing is executed again.

In a case where the reception power of the signal from the another shared AP 20 exceeds the second threshold (step S1403; Yes), the flow proceeds to step S1404. In step S1404, the non-AP MLD 410 transmits the handover request to the sharing AP 10 in order to switch the connection destination of the affiliated STA 420 from the shared AP 20 whose reception power is determined to fall below the first threshold in step S1402 to the shared AP 20 whose reception power is determined to exceed the second threshold in step S1403.

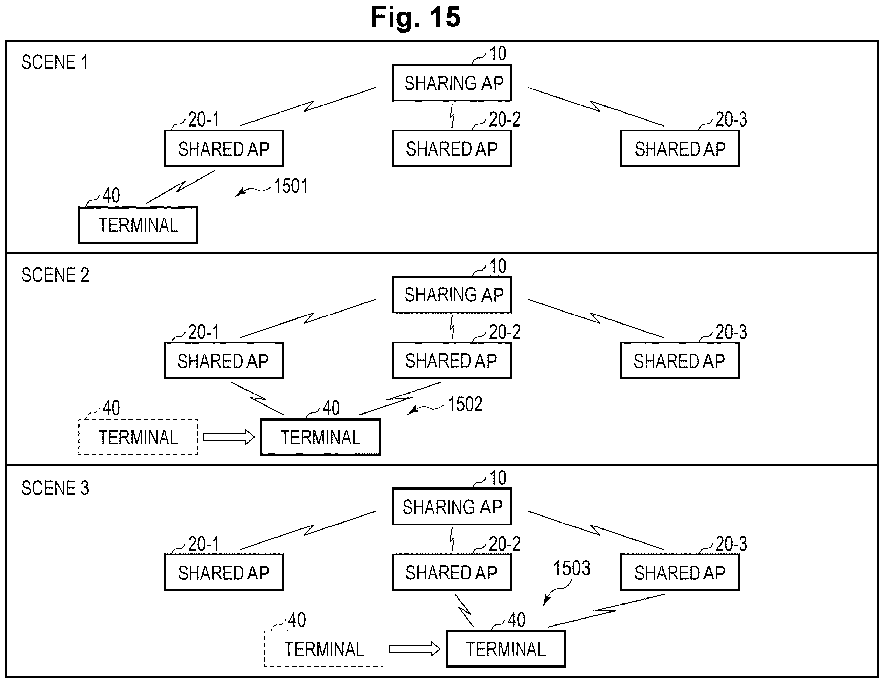

A specific example of the wireless communication processing including the association processing and the handover processing will be schematically described with reference to Fig. 15. The shared APs 20-1, 20-2, and 20-3 periodically transmit the beacon frames including the multi-AP management information. The terminal 40 is carried by a user and moves with the user.

In Scene 1, when the terminal 40 moves closer to a region 1501, the affiliated STA 420-1 of the terminal 40 receives the beacon frame transmitted by the shared AP 20-1. The non-AP MLD 410 of the terminal 40 recognizes the presence of the AP system 30 according to the received beacon frame. The non-AP MLD 410 transmits the multi-AP association request via the affiliated STA 420-1. The multi-AP association request includes the information designating the shared AP 20-1 as the connection destination of the affiliated STA 420-1. That is, the multi-AP association request requires establishment of the multi-AP connection and use of the wireless link between the affiliated STA 420-1 and the shared AP 20-1 for communication.

The sharing AP 10 receives the multi-AP association request via the shared AP 20-1 and transmits the association notification to the shared APs 20-1, 20-2, and 20-3. The association notification includes information indicating that the shared AP 20-1 is designated as the connection destination of the affiliated STA 420-1. The shared AP 20-1 transmits the response to the association notification to the sharing AP 10.

When receiving the response from the shared AP 20-1, the sharing AP 10 transmits the multi-AP association response to the non-AP MLD 410 using the shared AP 20-1. The non-AP MLD 410 receives the multi-AP association response via the affiliated STA 420-1. Then, the non-AP MLD 410 outputs the association notification to the affiliated STA 420-1. The affiliated STA 420-1 sets the connection destination and the frequency channel according to the association notification received from the non-AP MLD 410.

As a result, the multi-AP connection between the non-AP MLD 410 and the sharing AP 10 is established, and the wireless link between the affiliated STA 420-1 and the shared AP 20-1 becomes available for data exchange. The non-AP MLD 410 and the sharing AP 10 exchange the data frames using the wireless link between affiliated STA 420-1 and the shared AP 20-1.

In Scene 2, as the terminal 40 approaches a region 1502, the RSSI of the wireless signal from the shared AP 20-2 measured by the affiliated STA 420-2 of the terminal 40 increases. For example, the non-AP MLD 410 transmits a request for use of the wireless link between the affiliated STA 420-2 and the shared AP 20-2 for communication using, for example, the affiliated STA 420-2, in response to the RSSI exceeding a predetermined threshold. This request includes the information designating the shared AP 20-2 as the connection destination of the affiliated STA 420-2. The sharing AP 10 receives the request via the shared AP 20-2, and transmits a notification including information indicating that the shared AP 20-2 is designated as the connection destination of the affiliated STA 420-2 by multicast or broadcast. The shared AP 20-2 transmits a response to the notification to the sharing AP 10.

When receiving the response from the shared AP 20-2, the sharing AP 10 transmits the response to the non-AP MLD 410 using the shared AP 20-2. The non-AP MLD 410 receives the response via the affiliated STA 420-2. Then, the affiliated STA 420-2 outputs a notification, and the affiliated STA 420-2 sets the connection destination and the frequency channel according to the notification received from the non-AP MLD 410.

As a result, the non-AP MLD 410 and the sharing AP 10 can exchange data frames using the wireless link between the affiliated STA 420-1 and the shared AP 20-1 and the wireless link between the affiliated STA 420-2 and the shared AP 20-2.

In Scene 3, as the terminal 40 approaches a region 1503, the RSSI of the wireless signal from the shared AP 20-1 measured by the affiliated STA 420-1 decreases, and the RSSI of the wireless signal from the shared AP 20-3 measured by the affiliated STA 420-1 increases. In response to the RSSI of the wireless signal from the shared AP 20-1 falling below the predetermined first threshold and the RSSI of the wireless signal from the shared AP 20-3 exceeding the predetermined second threshold, the non-AP MLD 410 transmits the handover request requesting switch of the connection destination of the affiliated STA 420-1 from the shared AP 20-1 to the shared AP 20-3, using, for example, the affiliated STA 420-1. The sharing AP 10 receives the handover request via the shared AP 20-1, for example, and transmits the handover notification indicating that the connection destination of the affiliated STA 420-1 is switched from the shared AP 20-1 to the shared AP 20-3 by multicast or broadcast. The shared AP 20-1 releases the wireless connection with the affiliated STA 420-1 in response to the reception of the handover notification from the sharing AP 10. The shared AP 20-3 establishes the wireless connection with the affiliated STA 420-1 in response to the reception of the handover notification from the sharing AP 10, and transmits a response to the sharing AP 10.

In this manner, the multi-AP connection between the sharing AP 10 and the non-AP MLD 410 is established, and the handover for the affiliated STA 420-1 is executed by rewriting the link management information 231 in the shared AP 20 and rewriting the link management information 415 in the non-AP MLD 410 without executing the disassociation procedure and the association procedure. As a result, instantaneous interruption of the wireless connection does not occur at the time of handover.

Further, the handover for the affiliated STA 420-1 is executed in the state where the wireless link between the affiliated STA 420-2 and the shared AP 20-2 can be used for data exchange. This makes it possible to ensure more stable wireless connection.

Note that, in the embodiment in which the terminal 40 includes one affiliated STA 420, the handover can be performed similarly to the above.

As described above, the AP system 30 wirelessly communicates with the terminal 40. The AP system 30 includes the sharing AP 10 and the shared APs 20 belonging to the sharing AP 10 and arranged at different positions. The sharing AP 10 includes the communication unit 150 that wirelessly communicates with the shared AP 20, and the management unit 140 that establishes the multi-AP connection that is a comprehensive connection between the sharing AP 10 and the non-AP MLD 410 included in the terminal 40. Specifically, the management unit 140 establishes a plurality of wireless links by combinations of the plurality of shared APs 20 belonging to the sharing AP 10 and the plurality of affiliated STAs 420 included in the terminal 40 and belonging to the non-AP MLD 410. The management unit 140 manages which of the plurality of wireless links included in the established multi-AP connection is used for communication with the terminal 40.

In the above configuration, the multi-AP connection is established between the sharing AP 10 and the terminal 40. This enables handover without performing the disassociation procedure and the association procedure between the shared AP 20 and the affiliated STA 420. That is, it is possible to suppress occurrence of the instantaneous interruption of the wireless connection at the time of handover. As a result, it is possible to improve the reliability of the wireless communication.

The communication unit 150 transmits the management frame including information regarding the multi-AP connection, information regarding the handover, or the like to the plurality of shared APs 20 by multicast or broadcast. Examples of the information related to the multi-AP connection include the multi-AP management information and the association notification described above. The association notification includes the information designating the connection destination of each of the plurality of affiliated STAs 420. Examples of the information related to the handover include the handover notification described above. The handover notification includes the information giving an instruction on switching of the connection destination of any one of the plurality of affiliated STAs 420. By transmitting the management frame by multicast or broadcast when transmitting the management frame to all or some of the shared APs 20, it is possible to reduce power consumption as compared with a case of individual transmission.

Various modifications can be applied to the above-described embodiments.

In the example illustrated in Fig. 1, the shared AP 20 is separated from the sharing AP 10. One shared AP may exist in the sharing AP 10. In an embodiment in which the sharing AP 10 includes the shared AP 20-1, the wireless signal processing unit 151 illustrated in Fig. 5 is substituted for the shared AP 20-1.

In the above-described embodiment, the terminal 40 determines whether or not to execute the handover. In another embodiment, the sharing AP 10 may determine whether or not to execute the handover. In this case, the terminal 40 transmits the measurement result of the communication quality to the sharing AP 10, and the sharing AP 10 determines whether or not to execute the handover on the basis of the measurement result of the communication quality. The handover request is transmitted from the sharing AP 10 to the terminal 40.

The wireless communication function of the wireless stations (specifically, the sharing AP 10, the shared AP 20, and the terminal 40) may be implemented by discrete components such as chips. For example, a chip may be incorporated into a substrate of the wireless station at the time of manufacturing the wireless station. A wireless apparatus mentioned herein may refer to the wireless station, or may refer to the discrete component that implements the wireless communication function of the wireless station.

Note that the present invention is not limited to the foregoing embodiments and various modifications can be made in an implementation stage without departing from the gist of the invention. Further, the embodiments may be implemented in appropriate combination, and in this case, a combined effect can be obtained. Further, the above embodiment includes various inventions, and various inventions can be extracted by combinations selected from the plurality of disclosed components. For example, in a case where the problem can be solved and the effects can be obtained even if some components are deleted from all the components described in the embodiment, a configuration from which the components are deleted can be extracted as an invention.

### Reference Signs List

- 10: Sharing AP
- 11: CPU
- 12: Program memory
- 13: RAM
- 14: Wireless communication module
- 15: Wired communication module
- 20: Shared AP
- 21: CPU
- 22: Program memory
- 23: RAM
- 24: Wireless communication module
- 30: AP system
- 40: Terminal
- 41: CPU
- 42: Program memory
- 43: RAM
- 44: Wireless communication module
- 45: Display
- 46: Storage device
- 50: Wireless network
- 60: Communication network
- 70: Communication system
- 110: LLC processing unit
- 120: Data processing unit
- 130: MAC frame processing unit
- 140: Management unit
- 141: Multi-AP management information
- 142: Terminal management information
- 150: Communication unit
- 151 to 154: Wireless signal processing unit
- 210: Communication unit
- 211, 212: Wireless signal processing unit
- 220: MAC frame processing unit
- 230: Management unit
- 231: Link management information
- 411: Data processing unit
- 412: MAC frame processing unit
- 413: Management unit
- 414: Multi-AP management information
- 415: Link management information
- 420: Affiliated STA
- 421: Wireless signal processing unit
- 422: Communication quality measurement unit
- 430: Application execution unit
- 440: LLC processing unit
- 450: Communication unit

## Claims

1. A terminal apparatus that wirelessly communicates with an access point system including a sharing access point and a plurality of shared access points that are located at different physical positions and wirelessly communicates with the sharing access point, the terminal apparatus comprising:
a communication unit including a plurality of terminal wireless stations and configured to wirelessly communicate with the plurality of shared access points using the plurality of terminal wireless stations; and
a management unit configured to establish a multi-AP connection that is a comprehensive wireless connection between the sharing access point and the terminal apparatus, and manage which of a plurality of wireless links included in the established multi-AP connection is used for communication with the access point system,
wherein
the management unit
transmits, by using the communication unit, a handover request to the sharing access point via any of the plurality of shared access points, the handover request requesting switching of a connection destination of a first terminal wireless station of the plurality of terminal wireless stations from a first shared access point of the plurality of shared access points to a second shared access point of the plurality of shared access points,
receives, by using the communication unit, a handover response that is a response to the handover request from the sharing access point via any of the plurality of shared access points, and
switches the connection destination of the first terminal wireless station from the first shared access point to the second shared access point in response to the received handover response.

2. A sharing access point in an access point system that includes the sharing access point and a plurality of shared access points located at different physical positions and wirelessly communicates with a terminal apparatus including a plurality of terminal wireless stations, the sharing access point comprising:
a communication unit configured to wirelessly communicate with the plurality of shared access points; and
a management unit configured to establish a multi-AP connection that is a comprehensive wireless connection between the sharing access point and the terminal apparatus, and manage which of a plurality of wireless links included in the established multi-AP connection is used for communication with the terminal apparatus, wherein
the management unit
receives, from the terminal apparatus, by using the communication unit, a handover request that requests switching of a connection destination of a first terminal wireless station of the plurality of terminal wireless stations from a first shared access point of the plurality of shared access points to a second shared access point of the plurality of shared access points, and
transmits, by using the communication unit, a handover notification to at least the first shared access point and the second shared access point in response to receiving the handover request, the handover notification giving an instruction on switching of the connection destination of the first terminal wireless station from the first shared access point to the second shared access point.

3. The sharing access point according to claim 2, wherein the management unit transmits the handover notification to at least the first shared access point and the second shared access point by multicast or broadcast using the communication unit.

4. A shared access point in an access point system that includes a sharing access point and a plurality of shared access points located at different physical positions, and wirelessly communicates with a terminal apparatus including a plurality of terminal wireless stations, the shared access point comprising:
a communication unit configured to wirelessly communicate with the sharing access point and the terminal apparatus; and
a management unit configured to manage which of a plurality of wireless links established between the shared access point and the plurality of terminal wireless stations of the terminal apparatus is used for communication with the terminal apparatus, wherein
the management unit
receives, by using the communication unit, a handover notification from the sharing access point, the handover notification giving an instruction on switching of a connection destination of a first terminal wireless station of the plurality of terminal wireless stations from a first shared access point of the plurality of shared access points to a second shared access point of the plurality of shared access points,
changes the wireless link between the shared access point and the first terminal wireless station to a usable state for communication according to the received handover notification in a case where the second shared access point is the shared access point, and
changes the wireless link between the shared access point and the first terminal wireless station to an unusable state for communication according to the received handover notification in a case where the first shared access point is the shared access point.

5. The shared access point according to claim 4, wherein the handover notification is transmitted by the sharing access point by multicast or broadcast.

6. A wireless communication method executed by a terminal apparatus that wirelessly communicates with an access point system including a sharing access point and a plurality of shared access points that are located at different physical positions and wirelessly communicates with the sharing access point, the wireless communication method comprising:
wirelessly communicating with the plurality of shared access points using a communication unit including a plurality of terminal wireless stations;
establishing a multi-AP connection that is a comprehensive wireless connection between the sharing access point and the terminal apparatus; and
managing which of a plurality of wireless links included in the established multi-AP connection is used for communication with the access point system, wherein
the managing includes
transmitting, by using the communication unit, a handover request to the sharing access point via any of the plurality of shared access points, the handover request requesting switching of a connection destination of a first terminal wireless station of the plurality of terminal wireless stations from a first shared access point of the plurality of shared access points to a second shared access point of the plurality of shared access points,
receiving, by using the communication unit, a handover response that is a response to the handover request from the sharing access point via any of the plurality of shared access points, and
switching the connection destination of the first terminal wireless station from the first shared access point to the second shared access point in response to the received handover response.

7. A wireless communication method executed by a sharing access point in an access point system that includes the sharing access point and a plurality of shared access points located at different physical positions and wirelessly communicates with a terminal apparatus including a plurality of terminal wireless stations, the wireless communication method comprising:
wirelessly communicating with the plurality of shared access points using a communication unit;
establishing a multi-AP connection that is a comprehensive wireless connection between the sharing access point and the terminal apparatus; and managing which of a plurality of wireless links included in the established multi-AP connection is used for communication with the terminal apparatus, wherein
the managing includes
receiving, from the terminal apparatus, by using the communication unit, a handover request that requests switching of a connection destination of a first terminal wireless station of the plurality of terminal wireless stations from a first shared access point of the plurality of shared access points to a second shared access point of the plurality of shared access points, and
transmitting, by using the communication unit, a handover notification to at least the first shared access point and the second shared access point, the handover notification giving an instruction on switching of the connection destination of the first terminal wireless station from the first shared access point to the second shared access point, in response to receiving the handover request.

8. A wireless communication method executed by a shared access point in an access point system that includes a sharing access point and a plurality of shared access points located at different physical positions, and wirelessly communicates with a terminal apparatus including a plurality of terminal wireless stations, the wireless communication method comprising:
wirelessly communicating with the sharing access point and the terminal apparatus, using a communication unit; and
managing which of a plurality of wireless links established between the shared access point and the plurality of terminal wireless stations of the terminal apparatus is used for communication with the terminal apparatus, wherein
the managing includes
receiving, by using the communication unit, a handover notification from the sharing access point, the handover notification giving an instruction on switching of a connection destination of a first terminal wireless station of the plurality of terminal wireless stations from a first shared access point of the plurality of shared access points to a second shared access point of the plurality of shared access points,
changing the wireless link between the shared access point and the first terminal wireless station to a usable state for communication according to the received handover notification in a case where the second shared access point is the shared access point, and
changing the wireless link between the shared access point and the first terminal wireless station to an unusable state for communication according to the received handover notification in a case where the first shared access point is the shared access point.
